Europäisches Patentamt

**European Patent Office**

**Office européen des brevets**

(11) Veröffentlichungsnummer: **0 034 333**
A2

# (12) EUROPÄISCHE PATENTANMELDUNG

(21) Anmeldenummer: **81100965.3**

(22) Anmeldetag: **11.02.81**

(51) Int. Cl.³: **H 01 G 9/04**
**H 01 G 9/24**

(30) Priorität: **13.02.80 DE 3005370**

(43) Veröffentlichungstag der Anmeldung:
**26.08.81 Patentblatt 81/34**

(84) Benannte Vertragsstaaten:
**DE FR GB SE**

(71) Anmelder: **SIEMENS AKTIENGESELLSCHAFT Berlin
und München
Postfach 22 02 61
D-8000 München 22(DE)**

(72) Erfinder: **Assmann, Erich, Dipl.-Phys.
Bussardweg 57
D-7920 Heidenheim(DE)**

(72) Erfinder: **Fritze, Franz, Dipl.-Ing.
Frankenstrasse 2
D-7921 Nattenheim(DE)**

(72) Erfinder: **Schweikert, Wilhelm
Kistelbergstrasse 33
D-7920 Heidenheim(DE)**

(54) **Wickel-Elektrolytkondensator und Verfahren zu seiner Herstellung.**

(57) Die Erfindung betrifft einen Wickel-Eletrolytkondensator sowie ein Verfahren zu seiner Herstellung. Der Kondensator besteht aus aufgewickelten Lagen von mit einer dielektrischen Oxidschicht versehenen Anodenfolien (1) und Kathodenfolien (2), wobei die Folien durch mit einem Betriebselektrolyt getränkte Papierabstandhalter (3) voneinander getrennt sind. Die Kathodenfolien (2) und/oder die Papierabstandhalter (3) weisen querverlaufende Einprägungen auf. Die Erfindung wird bei Elektrolytkondensatoren mit "nassem" Betriebselektrolyt angewandt.

## FIG 1

EP 0 034 333 A2

SIEMENS AKTIENGESELLSCHAFT          Unser Zeichen
Berlin und München                  VPA
                                       80 P 1 0 2 2 E

Wickel-Elektrolytkondensator und Verfahren zu seiner
Herstellung

Die Erfindung betrifft einen Wickel-Elektrolytkondensator, welcher aus aufgewickelten Lagen von mit einer dielektrischen Oxidschicht versehenen Anodenfolien und Kathodenfolien besteht und bei dem die Folien durch mit einem Betriebselektrolyt getränkte Papierabstandhalter voneinander getrennt sind.

Derartige Elektrolytkondensatoren, bei denen die Anodenfolie gegebenenfalls zur Erhöhung der Kapazität aufgerauht sein kann bevor die dielektrische Oxidschicht aufgebracht wird, werden nach dem Wickeln mit einem flüssigen Betriebselektrolyt imprägniert. Es ist nun schwierig, vor allem bei größeren Wickelabmessungen, eine gleichmäßige Durchimprägnierung der Papierabstandhalter über die gesamte Wickelbreite zu erzielen. Eine unvollständige Imprägnierung hat bekanntlich eine Verschlechterung der elektrischen Eigenschaften sowie eine Verkürzung der Lebensdauer zur Folge. Beispielsweise wirkt sich an den Stellen der Elektrodenfolien, welche zu wenig Betriebselektrolyt erhalten die sogenannte "Mangelkorrosion" nachteilig aus. Dabei wird der Betriebselektrolyt zersetzt, und es beginnt eine Gasentwicklung, welche im schlimmsten Fall zur Zerstörung des Kondensators führen kann.

Bisher versuchte man diese Schwierigkeiten durch aufwendige Imprägnierverfahren, wie beispielsweise Vakuum- und Druckimprägnierung, sowie durch Einsatz von hoch-

Sac 1 Pj
13.02.1980

0034333

saugfähigen, teurem Papier zu umgehen und eine ausreichende Imprägniergüte zu erreichen. Neben der Verteuerung des Endproduktes durch derartig aufwendige Verfahren war jedoch nicht immer der erwünschte Erfolg zu erzielen.

Aufgabe der vorliegenden Erfindung ist es, einen Wickel-Elektrolytkondensator der eingangs genannten Art anzugeben, bei dem eine gute Durchimprägnierung selbst bei großen Wickelabmessungen ohne die vorstehend aufgeführten aufwendigen Imprägnierverfahren erreicht wird.

Diese Aufgabe wird bei einem Wickel-Elektrolytkondensator der eingangs angegebenen Art erfindungsgemäß dadurch gelöst, daß die Kathodenfolien und/oder Papierabstandhalter querverlaufende Einprägungen aufweisen.

Dadurch erzielt man den Vorteil, daß im Wickelinnern Kapillaren geschaffen sind, welche den Betriebselektrolyt auch ohne aufwendige Imprägnierverfahren ungehindert ins Wickelinnere eindringen lassen.

Ein Verfahren zur Herstellung eines derartigen Wickel-Elektrolytkondensators sieht vor, daß die Kathodenfolien und/oder Papierabstandhalter auf der Wickelmaschine über zahnradartige Walzen geführt werden und dadurch mit den querverlaufenden Einprägungen (Riffelung) versehen werden.

Durch Veränderung der Profilform und Maße, sowie der Gestaltung der Andrückrollen, des Wickelzuges und der Materialien kann die jeweils gewünschte Einprägung erreicht werden. Der Verformungsgrad, d.h. die Größe der Kapillaren, richtet sich dabei nach der Viskosität des verwendeten Betriebselektrolyts, der Wickelabmessungen sowie der Saugfähigkeit der Papierabstandhalter.

Aus der DE-AS 12 20 936 ist zwar ein Elektrolytkondensator bekannt, bei dem die Folienwindungen gewellt sind, jedoch handelt es sich dabei zum einen um einen Elektrolytkondensator mit einem Halbleiter als Gegenelektrode und zum anderen ist bei dem bekannten Elektrolytkondensator die Anodenfolie gewellt. Somit kann beim bekannten Kondensator die Erscheinung der "Mangelkorrosion" nicht auftreten, da er keinen flüssigen Betriebselektrolyt aufweist. Dagegen sind beim Wickel-Elektrolytkondensator gemäß der obengenannten Erfindung die Kathodenfolie und/oder die Papierabstandhalter mit querverlaufenden Einprägungen versehen. Bei Anbringung derartiger Einprägungen auf der Anodenfolie würde die Oxidschicht beschädigt werden, was zu unerwünschten elektrischen Ausfällen im fertigen Kondensator führen würde.

Die Erfindung wird an Hand von Ausführungsbeispielen näher erläutert.

In der dazugehörenden Zeichnung zeigen
Fig. 1 ein Schnittbild des Wickelaufbaus,
Fig. 2 ein Wickelschema und
Fig. 3 ein Diagramm der Gasentwicklung beim erfindungsgemäßen und einem bekannten Elektrolytkondensator.

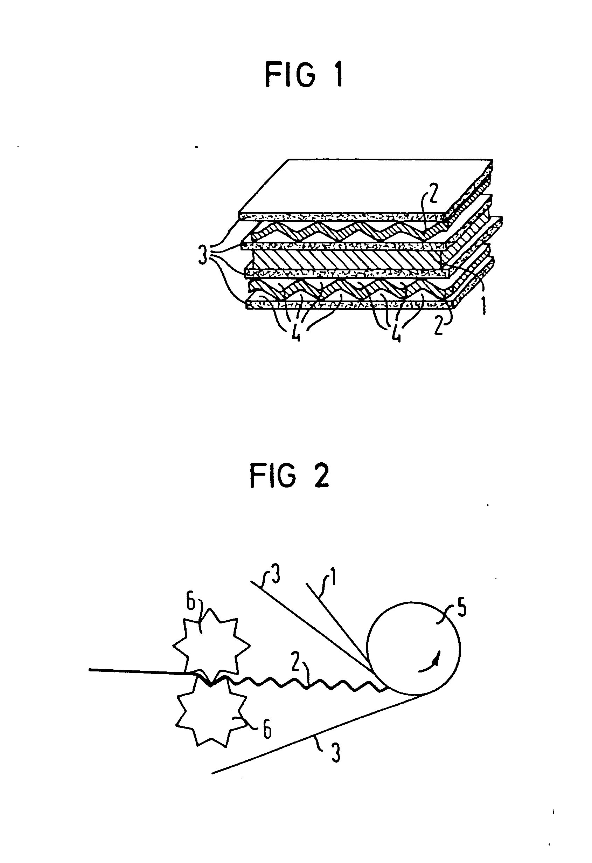

In Fig. 1 ist ein Schnittbild des Wickelaufbaus beim Elektrolytkondensator gemäß der Erfindung dargestellt. Die Anodenfolie 1 aus Aluminium bzw. einem anderen geeigneten Ventilmetall ist mit einer in der Figur nicht dargestellten Oxidschicht überzogen, welche in einem elektrochemischen Prozeß auf die Folie 1 aufgebracht ist, und welche im fertigen Kondensator als Dielektrikum dient. Die Anodenfolie 1 kann zur Erhöhung der Kapazität vor der Aufbringung der Oxidschicht durch einen elektrochemischen Ätzprozeß aufgerauht sein.

Die Kathodenfolie 2, welche beispielsweise ebenfalls aus Aluminium bestehen kann, ist mit querverlaufenden Einprägungen versehen. Anodenfolie 1 und Kathodenfolie 2 sind zur Vermeidung von elektrischen Kurzschlüssen durch Papierabstandhalter 3 voneinander getrennt. Die Papierabstandhalter 3 sind mit dem Betriebselektrolyt getränkt, welcher im fertigen Kondensator als Kathode dient. Durch die Einprägungen in den als Stromzuführungselement dienenden Kathodenfolien 2 werden Kapillaren 4 geschaffen, welche das Eindringen des Betriebselektrolyts während des Imprägniervorgangs in das Wickelinnere gewährleisten.

In der Fig. 2 ist ein Wickelschema bei der Herstellung des Wickel-Elektrolytkondensators gemäß der Erfindung dargestellt. Auf einer Wickelmaschine wird dabei der Wickel-Elektrolytkondensator 5 dadurch gebildet, daß die Anodenfolie 1 und die Kathodenfolie 2 unter Zwischenschaltung von Papierabstandhaltern 3 aufgewickelt werden. Die Kathodenfolie 2 wird dabei über zahnradartige Walzen 6 geführt, welche die Kathodenfolie 2 mit querverlaufenden Einprägungen versehen.

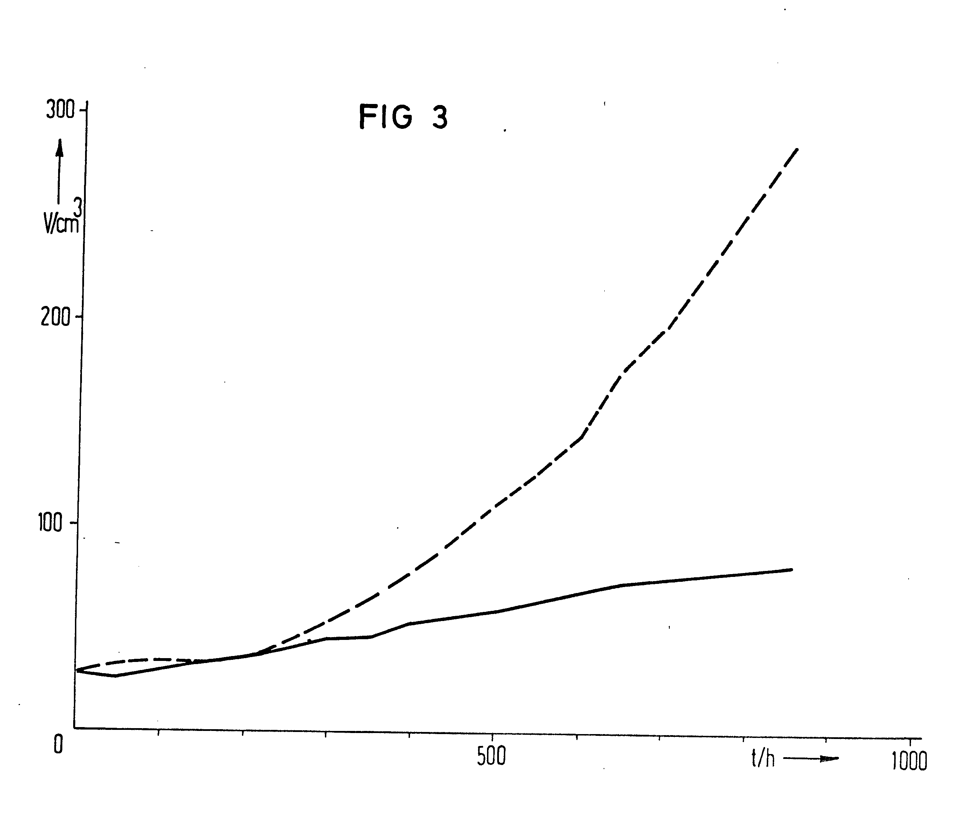

In der Fig. 3 ist im Diagramm das Volumen V des entwickelten Gases in Abhängigkeit von der Zeit t im Vergleich zwischen bekannten Elektrolytkondensatoren (gestrichelte Linie) und den erfindungsgemäßen Elektrolytkondensatoren (ausgezogene Linie) dargestellt. Der Versuch wurde mit Elektrolytkondensatoren der Nenndaten 240 000 $\mu$F/7,5 V und den Wickelabmessungen Ø 52/Länge 128 mm durchgeführt. Die Kondensatoren wurden in einem temperaturgeregelten Glykolbad mit 85 °C untersucht. Das entstehende Gas wurde über abgedichtete Rohrleitungen in zwei im Wasserbad stehende Meßzylinder geleitet. Die Kondensatoren waren während des Versuchs spannungslos gelagert. Der Fig. 3 ist zu entnehmen, daß am Ende des Versuchs die in der Zeiteinheit entstehende Gasmenge beim bekannten Kondensator 15 mal größer als beim erfindungsgemäßen Kondensator ist.

In einem weiteren Versuch wurde eine Dauerspannungsprüfung an Kondensatoren der gleichen Art mit einem glykolborat-haltigen Betriebselektrolyt durchgeführt. Dabei wurden die Kondensatoren über eine Dauer von 1000 Stunden bei 85 °C mit der Nennspannung von 7,5 V betrieben. Die Ergebnisse der Dauerspannungsprüfung sind in der folgenden Tabelle für eine Zeitdauer von 500 und 1000 Stunden wiedergegeben. Dabei sind die elektrischen Werte der Kapazität C und des Verlustfaktors tan $\delta$ als Mittelwerte bei einer Meßfrequenz von 120 Hz bei Umgebungstemperatur angegeben. Die Kondensatoren waren mit einer Überdrucksicherung versehen.

|  | 500 h/$U_N$/85 °C | | | 1000 h/$U_N$/85 °C | | |
|---|---|---|---|---|---|---|
|  | $\Delta \frac{C}{C_0}$ | $\frac{\tan \delta}{\tan \delta_0}$ | Ventil-zustand | $\Delta \frac{C}{C_0}$ | $\frac{\tan \delta}{\tan \delta_0}$ | Ventil-zustand |
| I. | -7,7% | 1,04 | in Ordnung | -15,3% | 1,07 | 75% leicht 25% stark gewölbt |
| II. | -9,1% | 1,17 | 33% geplatzt | alle Ventile geplatzt | | |

I. Kathode erfindungsgemäß
II. Kathode herkömmlich.

Wie der Tabelle zu entnehmen ist, waren bei den bekannten Kondensatoren nach 500 Stunden bereits 33% zerstört, während am Ende der Dauerspannungsprüfung alle bekannten Kondensatoren ausgefallen waren. Demgegenüber hatten die erfindungsgemäßen Kondensatoren die Prüfung bestanden.

Neben den in der Zeichnung dargestellten Ausführungsbeispielen bei denen die Kathodenfolie querverlaufende Einprägungen aufweist, tritt die erfindungsgemäße Verbesserung auch bei Elektrolytkondensatoren ein, bei denen die Papierabstandhalter - allein oder gegebenenfalls zusätzlich zur Kathodenfolie - mit querverlaufenden Einprägungen versehen sind.

2 Patentansprüche,
3 Figuren.

Patentansprüche

1. Wickel-Elektrolytkondensator, welcher aus aufgewikkelten Lagen von mit einer dielektrischen Oxidschicht versehenen Anodenfolien und Kathodenfolien besteht und bei dem die Folien durch mit einem Betriebselektrolyt getränkte Papierabstandhalter voneinander getrennt sind, d a d u r c h   g e k e n n z e i c h n e t , daß die Kathodenfolien (2) und/oder die Papierabstandhalter (3) querverlaufende Einprägungen aufweisen.

2. Verfahren zur Herstellung eines Wickel-Elektrolytkondensators nach Anspruch 1,   d a d u r c h   g e k e n n z e i c h n e t , daß die Kathodenfolien (2) und/oder die Papierabstandhalter (3) auf der Wickelmaschine über zahnradartige Walzen (6) geführt werden und dadurch mit den querverlaufenden Einprägungen versehen werden.

FIG 1

FIG 2

FIG 3